(19) **Europäisches Patentamt**
**European Patent Office**
**Office européen des brevets**

(11) **EP 4 450 923 A1**

(12) **EUROPEAN PATENT APPLICATION**
published in accordance with Art. 153(4) EPC

(43) Date of publication:
**23.10.2024 Bulletin 2024/43**

(21) Application number: **22906884.6**

(22) Date of filing: **22.03.2022**

(51) International Patent Classification (IPC):
**G01C 3/06** (2006.01)  **G06T 7/60** (2017.01)
**H04N 7/18** (2006.01)

(52) Cooperative Patent Classification (CPC):
**G01C 3/06; G06T 7/60; H04N 7/18**

(86) International application number:
**PCT/JP2022/013013**

(87) International publication number:
**WO 2023/112347 (22.06.2023 Gazette 2023/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.12.2021 JP 2021203917**

(71) Applicant: **Furuno Electric Co., Ltd.
Nishinomiya-City, Hyogo 662-8580 (JP)**

(72) Inventors:
• **YANAGI, Katsuyuki
Nishinomiya-City, Hyogo 6628580 (JP)**
• **TAKAHASHI, Yuta
Nishinomiya-City, Hyogo 6628580 (JP)**

(74) Representative: **Müller Hoffmann & Partner
Patentanwälte mbB
St.-Martin-Straße 58
81541 München (DE)**

(54) **TARGET MONITORING DEVICE, TARGET MONITORING METHOD, AND PROGRAM**

(57) [Problem] To provide a target monitoring device with which it is possible to improve the accuracy of estimating a distance from an imaging position of a camera to a ship. [Solution] This target monitoring device comprises: an image acquiring unit for acquiring an image including a target on the sea, imaged by a camera; an image recognition unit for detecting an area of the target included in the image; a type acquiring unit for acquiring a type of the target; a height acquiring unit for acquiring a representative height associated in advance with the type; and a distance estimating unit for estimating a distance from the imaging position to the target on the basis of a height-direction dimension of the image, a height-direction dimension of the region of the target, and the representative height.

FIG. 3

**Description**

Technical Field

The disclosure relates to a target monitoring device, a target monitoring method, and a program.

Related Art

Conventionally, a technique for detecting a target, such as a ship, in an image imaged by a camera through image recognition is known.

Citation List

Patent Literature

Patent Document 1: WO 2020049634

SUMMARY

Technical Problem

However, even though a target in an image can be detected through image recognition, it is still difficult to accurately acquire a distance to the detected target.
The disclosure has been made in view of the above, and a main objective is to provide a target monitoring device, a target monitoring method, and a program capable of increasing the accuracy of estimating a distance from an imaging position of a camera to a target.

Solution to Problem

In order to solve the issue, a target monitoring device according to an aspect of the disclosure provides: an image acquiring unit, acquiring an image including a target in the sea and imaged by a camera; an image recognizing unit, detecting a region of the target included in the image; a type acquiring unit, acquiring a type of the target; a height acquiring unit, acquiring a representative height associated in advance with the type of the target; and a distance estimating unit, estimating a distance from an imaging position to the target based on a dimension of the image in a height direction, a dimension of the region of the target in the height direction, and the representative height. Accordingly, it is possible to improve the accuracy of estimating the distance from the imaging position of the camera to the target.
In the above aspect, it may also be that the distance estimating unit: calculates an occupancy angle of the target within a view angle of the camera in the height direction based on the dimension of the image in the height direction, the dimension of the region of the target in the height direction, and the view angle of the camera in the height direction, and estimates the distance from the imaging position to the target based on the occupancy angle of the target, the representative height, and a height of the camera. Accordingly, it is possible to improve the accuracy of estimating the distance from the imaging position of the camera to the target.
In the above aspect, it may also be that the distance estimating unit: calculates the occupancy angle of the target in the view angle based on the dimension of the image in the height direction, the dimension of the region of the target in the height direction, the view angle of the camera in the height direction, a focal point distance of the camera, and an optical center of the camera. Accordingly, it is possible to improve the accuracy of estimating the distance from the imaging position of the camera to the target.
In the above aspect, it may also be that the image recognizing unit detects a boundary box surrounding the target included in the image as the region of the target. Accordingly, the dimension of the region of the target in the height direction is easily acquired.
In the above aspect, it may also be that the image recognizing unit the image recognizing unit detects the region and a type of the target included in the image, and the type acquiring unit acquires the type of the target detected by the image recognizing unit. Accordingly, it is possible to estimate the distance to the target by using the type detected by the image recognizing unit.
In the above aspect, it may also be that the type acquiring unit acquires a type of the target detected through an automatic identification system (AIS). Accordingly, it is possible to estimate the distance to the target by using the type detected by AIS.
In the above aspect, it may also be that the camera is mounted in a ship, and the target in the sea is an other ship. Accordingly, it is possible to improve the accuracy of estimating the distance from the position of a ship to an other ship.

In addition, a target monitoring method according to another aspect of the disclosure includes: acquiring an image including a target in the sea and imaged by a camera; detecting a region of the target included in the image; acquiring a type of the target; acquiring a representative height associated in advance with the type; and estimating a distance from an imaging position to the target based on a dimension of the image in a height direction, a dimension of the region of the target in the height direction, and the representative height. Accordingly, it is possible to improve the accuracy of estimating the distance from the imaging position of the camera to the target.

In addition, a program according to another aspect of the disclosure executed by a computer to: A program, executed by a computer to:

acquire an image comprising a target in the sea and imaged by a camera; detect a region of the target comprised in the image; acquire a type of the target; acquire a representative height associated in advance with the type; and estimate a distance from an imaging position to the target based on a dimension of the image in a height direction, a dimension of the region of the target in the height direction, and the representative height. Accordingly, it is possible to improve the accuracy of estimating the distance from the imaging position of the camera to the target.

BRIEF DESCRIPTION OF DRAWINGS

[FIG. 1] FIG. 1 is a diagram illustrating a configuration example of a target monitoring system.
[FIG. 2] FIG. 2 is a diagram illustrating a configuration example of a target monitoring device.
[FIG. 3] FIG. 3 is a diagram illustrating a configuration example of an image processing unit.
[FIG. 4] FIG. 4 is a diagram illustrating a recognition example of an image.
[FIG. 5] FIG. 5 is a diagram illustrating an example of a boundary box.
[FIG. 6] FIG. 6 is a diagram illustrating an example of a type-height database.
[FIG. 7] FIG. 7 is a diagram illustrating an example of calculating a distance until a target.
[FIG. 8] FIG. 8 is a diagram illustrating an example of calculating a distance until a target.
[FIG. 9] FIG. 9 is a diagram illustrating a procedural example of a target monitoring method.

DESCRIPTION OF EMBODIMENTS

In the following, the embodiments of the disclosure are described with reference to the drawings.

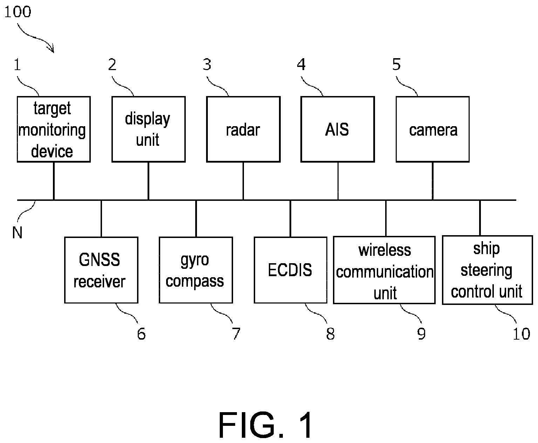

FIG. 1 is a block diagram illustrating a configuration example of a target monitoring system 100. The target monitoring system 100 is a system mounted in a ship. In the following description, the ship in which the target monitoring system 100 is mounted is referred to as "own ship", and another ship is referred to as "other ship".

The target monitoring system 100 includes a target monitoring device 1, a display unit 2, a radar 3, an AIS 4, a camera 5, a GNSS receiver 6, a gyro compass 7, an ECDIS 8, a wireless communicating unit 9, and a ship steering control unit 10. Such components are connected with a network N, such as LAN, and are able to communicate with each other through network communication.

The target monitoring device 1 a computer that includes a CPU, a RAM, a ROM, a nonvolatile memory, and an input/output interface, etc. The CPU of the target monitoring device 1 executes an information process in accordance with a program loaded from the ROM or the nonvolatile memory to the RAM.

The program may also be supplied via an information storage medium, such as an optical disc or a memory card, and may also be supplied via a communication network such as the Internet or an LAN.

The display unit 2 displays a display image generated by the target monitoring device 1. The display unit 2 also displays a radar image, a camera image, or an electronic chart, etc.

The display unit 2, for example, is a display device having a touch sensor, i.e., a so-called touch panel. The touch sensor detects an indicated position in an image indicated by the user's finger, etc. However, the disclosure is not limited thereto. The indicated position may also be input by using a trackball, etc.

The radar 3 emits radio waves around the own ship, receives the reflected waves thereof, and generates echo data based on the received signals. In addition, the radar 3 recognizes a target from the echo data, and generates target tracking (TT) data indicating the position and the velocity of the target.

The automatic identification system (AIS) 4 receives AIS data from other ships present around the own ship or from land control. A VHF data exchange system (VDES) may also be used, instead of being limited to AIS. The AIS data include recognition symbols, ship names, positions, courses, velocities, ship types, ship body lengths, and destinations, etc., of other ships.

The camera 5 is a digital camera that images the outside from the own ship to generate image data. The camera 5 is disposed at a bridge of the own ship and toward a bow orientation, for example. The camera 5 may be a camera having pan/tilt/zoom functions, i.e., a so-called PTZ camera.

In addition, the camera 5 may also include an image recognizing unit that estimates a position and a type of a target, such as other ships, included in the imaged image by using an object detecting model. In addition to the camera 5, the image recognizing unit may also be realized in other devices, such as the target monitoring device 1.

The GNSS receiver 6 detects the position of the own ship based on radio waves received from the global navigation satellite system (GNSS). The gyro compass 7 detects a bow orientation of the own ship. A GPS compass may also be used, instead of being limited to the gyro compass.

The electronic chart display and information system (ECDIS) 8 acquires the position of the own ship from the GNSS receiver 6 and displays the position of the own ship on an electronic chart. In addition, the ECDIS 8 also displays a planned route of the own ship on the electronic chart. A GNSS plotter may also be used, instead of being limited to ECDIS.

The wireless communication unit 9 includes various wireless components for ultra short wave band, very short wave band, medium and short wave band, short wave band, etc., for realizing the communication with other ships or land control.

The ship steering control unit 10 is a control device for realizing automatic ship steering, and controls a steering device of the own ship. In addition, the ship steering control unit 10 may also control the engine of the own ship.

In the embodiment, the target monitoring device 1 is an independent device. However, the disclosure is not limited thereto, and may also be integrated with another device, such as the ECDIS 8. That is, the functional units of the target monitoring device 1 may also be realized by other devices.

In the embodiment, the target monitoring device 1 is mounted in the own ship and used to monitor a target, such as an other ship, present around the own ship. However, the disclosure is not limited thereto. For example, the target monitoring device 1 may also be disposed in the land control and configured to monitor a ship present in a controlled sea area.

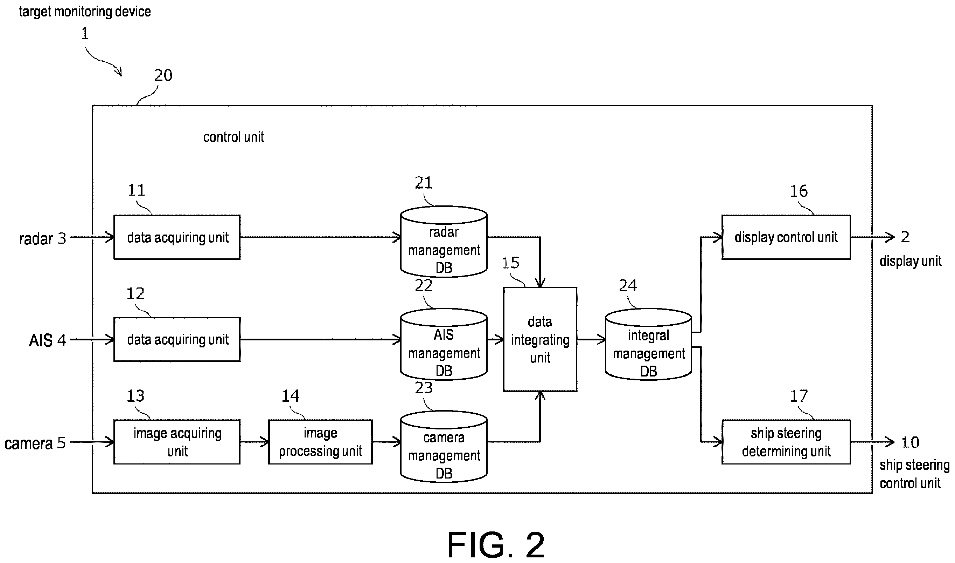

FIG. 2 is a diagram illustrating a configuration example of the target monitoring device 1. The control unit 20 of the target monitoring device 1 includes a data acquiring unit 11, a data acquiring unit 12, an image acquiring unit 13, an image processing unit 14, a data integrating unit 15, a display control unit 16, and a ship steering determining unit 17. These functional units are realized by executing information processing according to a program by using the control unit 20.

The control unit 20 of the target monitoring device 1 further includes a radar management database (DB) 21, an AIS management DB22, a camera management DB 23, and an integral management DB 24. The storage units thereof are provided in the memory of the control unit 20.

The data acquiring unit 11 sequentially acquires, as target data, TT data generated by the radar 3, and registers the target data in the radar management DB 21.

The target data registered in the radar management DB 21 include the position, the ship velocity, and the course, etc., of the target, such as an other ship, detected by the radar 3. The target data registered in the radar management DB 21 may further include the track of the target, the elapsed time since detection, the size of the echo image, and the signal strength of the reflected waves, etc.

The data acquiring unit 12 acquires, as target data, the AIS data received by the AIS 4 and registers the AIS data in the AIS management DB 22.

The target data registered in the AIS management DB 22 includes the position, the ship velocity, and the course, etc., of an other ship, detected by the AIS 4. The target data registered in the AIS management DB 22 may also include the type, the ship name, the ship body length, the ship body width, and the destination, etc., of the other ship.

The image acquiring unit 13 acquires an image including the target, such as an other ship, imaged by the camera 5. The image acquiring unit 13 sequentially acquires time-series images from the camera 5, and sequentially provides the time-series images to the image processing unit 14. The time-series images are, for example, still images (frames) included in motion image data.

The image processing unit 14 performs a particular image process, such as image recognition, on the image acquired by the image acquiring unit 13, generates target data of the target recognized from the image, and registers the target in the camera management database 23. Details of the image processing unit 14 will be described afterwards.

The target data registered in the camera management DB 23 includes the position, the ship velocity, and the course, etc., of the target, such as an other ship, calculated by the image processing uni4 14. The target data registered in the camera management DB may also include the size of the target, the type of the target, and the elapsed time from detection, etc.

The position of the target detected by the radar 3 and the position of the target recognized from the image imaged by the camera 5 are relative positions with respect to the own ship. Therefore, the positions can be converted into absolute positions by using the position of the own ship detected by the GNSS receiver 6.

The target detected by the radar 3 and the target recognized from the image imaged by the camera 5 are mainly ships, but may also include others such as a buoy.

The data integrating unit 15 registers the target data registered in the radar management DB 21, the AIS management DB 22, and the camera management DB 23 in the integral management DB 24 for cross-management of these databases. The target data registered by the data integrating unit 15 include the position, the ship velocity, and the course, etc., of the target, such as an other ship.

In the case where the position included in the target data registered in one of the radar management DB 21, the AIS management DB 22, and the camera management DB 23 and the position included in the target data registered in another one of the radar management DB 21, the AIS management DB 22, and the camera management DB 23 are the same or similar, the data integrating unit 15 registers these target data in the integral management DB 24.

The display control unit 16 generates a display image including an object indicating the target based on the target data registered in the integral management DB 24 and outputs the display image to the display unit 2. The display image is, for example, a radar image, an electronic chart, or an image formed by synthesizing a radar image and an electronic chart. The object indicating the target is disposed at a position in the image corresponding to the actual position of the target.

The ship steering determining unit 17 performs ship steering determination based on the target data registered in the integral management DB 24, and, in a case of determining that it is necessary to avoid a target, causes the ship steering control unit 10 to perform an avoidance steering operation. Specifically, the ship steering control unit 10 calculates an avoidance route for avoiding the target by using an avoidance steering algorithm, and controls the steering device and an engine, etc., so that the own ship follows the avoidance route.

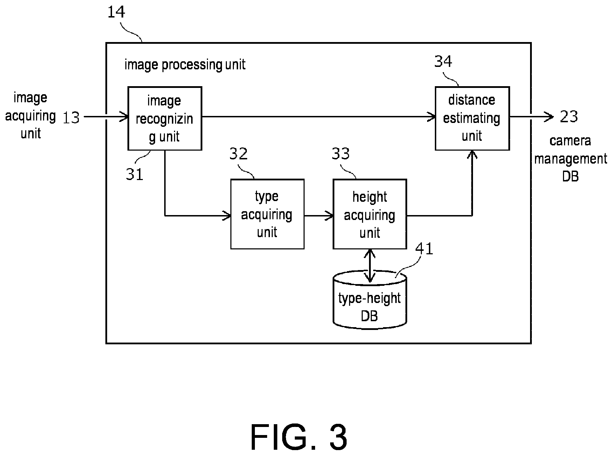

FIG. 3 is a diagram illustrating a configuration example of the image processing unit 14. The image processing unit 14 includes an image recognizing unit 31, a type acquiring unit 32, a height acquiring unit 33, a distance estimating unit 34, and a type-height DB 41. The same figure illustrates a configuration relating to a function of estimating a distance to the target among the functions realized by the image estimating unit 14.

The image recognizing unit 31 detects a target region included in the image acquired by the image acquiring unit 13. In addition, the image recognizing unit 31 detects the type of the target as well as the region of the target included in the image. The type of the target may be a ship type, such as a tanker or a fishing boat.

Specifically, the image recognizing unit 31 calculates the region of the target included in the image, the type of the target, and the estimation reliability by using a learned model generated in advance through machine learning. However, the disclosure is not limited thereto. The image recognizing unit 31 may also recognize the region included in the image and the type of the target by using a rule base.

The learned model is an object detection model, such as a single shot multibox detector (SSD) or a you only look once (YOLO), and detects a boundary box surrounding the target included in the image as the region of the target. However, the disclosure is not limited thereto. The learned model may also be a region split model, such as semantic segmentation or instance segmentation.

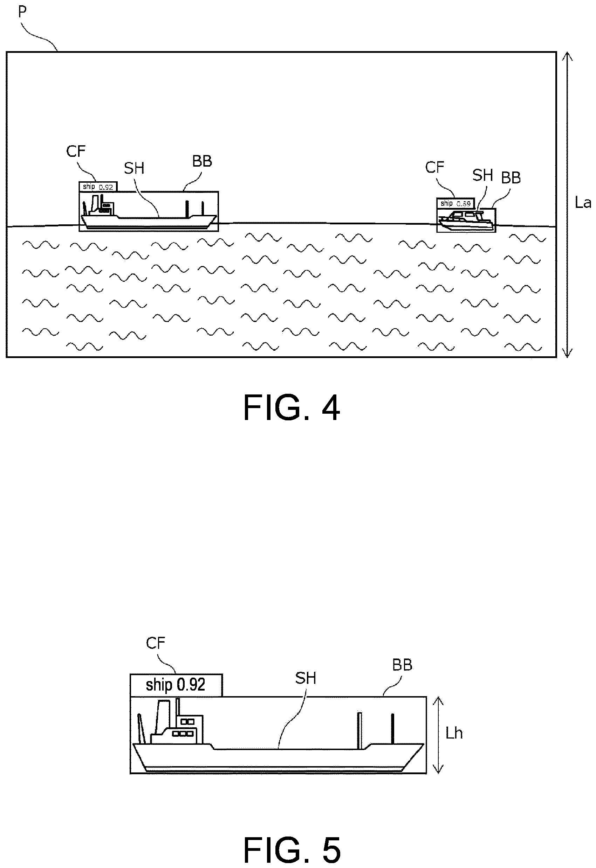

FIG. 4 is a diagram illustrating a recognition example of an image P. FIG. 5 is a diagram in which a boundary box BB is enlarged. As shown in these figures, an other ship SH included in the image P is surrounded by a boundary box BB in a rectangular shape. A label CF in which the type of the target and the estimation reliability are recorded is added to the boundary box BB.

La in FIG. 4 indicates the dimension of the image P in the height direction. Lh in FIG. 5 indicates the dimension of the region of the target in the height direction, that is, the dimension of the boundary box BB in the height direction. The height direction of the image is a direction corresponding to the height direction in the actual space, and is the upper-lower direction in the illustrated example. The dimension is represented by using the number of pixels, for example.

The height of the target (particularly a ship) within the image is substantially constant irrelevant of the orientation. Therefore, if the height of the target is known, the distance to the target can be acquired. Although the height of the target is unknown, such height can be acquired once the type of the target is known. Therefore, in the embodiment, the distance to the target is estimated based on the height corresponding to the type of the target, as described below.

The type acquiring unit 32 acquires the type of the target detected by the image recognizing unit 31. However, the disclosure is not limited thereto. The type acquiring unit 32 may also acquire the type of an other ship detected by the AIS 4, acquire the type of the target input by the user, and acquire the ship body length of an other ship detected by the AIS 4 to estimate the ship type of the other ship according to the ship body length of the other ship that is acquired.

The height acquiring unit 33 acquires a representative height associated in advance with the type of the target acquired by the type acquiring unit 32. Specifically, the height acquiring unit 33 refers to the type-height DB 41 to acquire the representative height corresponding to the type of the target.

However, the disclosure is not limited thereto. The height acquiring unit 33 may also acquire the ship body length of an other ship detected by the AIS 4, refer to a database in which the ship body length and the representative height are associated with each other, and acquire the representative height associated in advance with the ship body length of the other ship that is acquired.

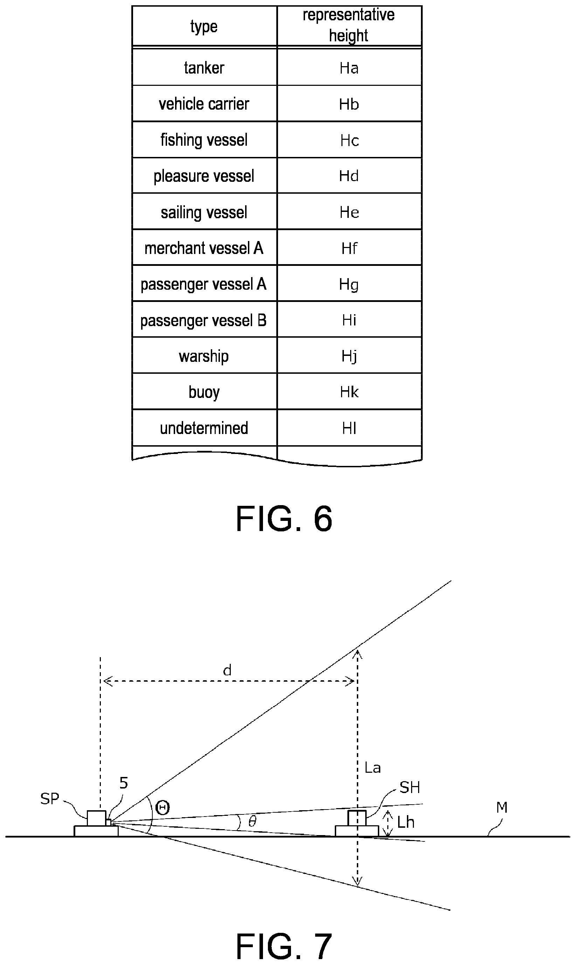

FIG. 6 is a diagram illustrating an example of the type-height DB 41. In the type-height database 41, the type of the target and the representative height are associated with each other. The type-height DB 41 is provided in the memory of the control unit 20.

The types of the target include, for example, ship types, such as a tanker, a vehicle carrier, a fishing vessel, a pleasure vessel, a sailing vessel, a merchant vessel, a passenger vessel, or a warship. In addition, the type of the target may further include an installation object in the sea, etc., such as a buoy.

The representative height is a height of a target representing such type, such as a height average of the targets in a type. In the example as shown, the representative height is a value. However, the disclosure is not limited thereto. The representative height may also be a range in which upper and lower limits are defined.

The distance estimating unit 34 estimates the distance to the target based on the dimension of the image in the height direction as acquired by the image acquiring unit 13, the dimension of the region of the target in the height direction as detected by the image recognizing unit 31, and the representative height acquired by the height acquiring unit 33. Before the distance to the target is estimated, a pre-process, such as distortion calibration on the image, may also be applied.

Specifically, as shown in FIG. 7, firstly, the distance estimating unit 34 calculates an occupancy angle $\theta$ of the target SH within a view angle $\Theta$ based on the dimension La of the image in the height direction, the dimension Lh of the region of the target SH in the height direction, and the view angle $\Theta$ of the camera 5 in the height direction.

The view angle $\Theta$ is an angle representing a range included in the image when imaged by using the camera 5, and is an angle determined by the lens of the camera 5. The occupancy angle $\theta$ of the target SH is an angle representing the range occupied by the target SH, and is an angle between the upper end and the lower end of the target SH with the camera 5 as the center.

Since the ratio between the dimension La of the image in the height direction and the dimension Lh of the region of the target SH in the height direction and the ratio between the view angle $\Theta$ of the camera 5 in the height direction and the occupancy angle $\theta$ of the target SH can be considered as the same, the occupancy angle $\theta$ of the target SH can be calculated accordingly.

More specifically, the distance estimating unit 34 may also calculate the occupancy angle $\theta$ of the target SH in the view angle $\Theta$ further based on the focal point distance and the optical center of the camera 5, in addition to the dimension La of the image in the height direction, the dimension Lh of the region of the target SH in the height direction, and the view angle $\Theta$ of the camera 5 in the height direction. That is, considering camera-internal parameters of a perspective projection model, the occupancy angle $\theta$ of the target SH may also be calculated by using the focal point distance and the optical center of the camera 5 representing the camera-internal parameters.

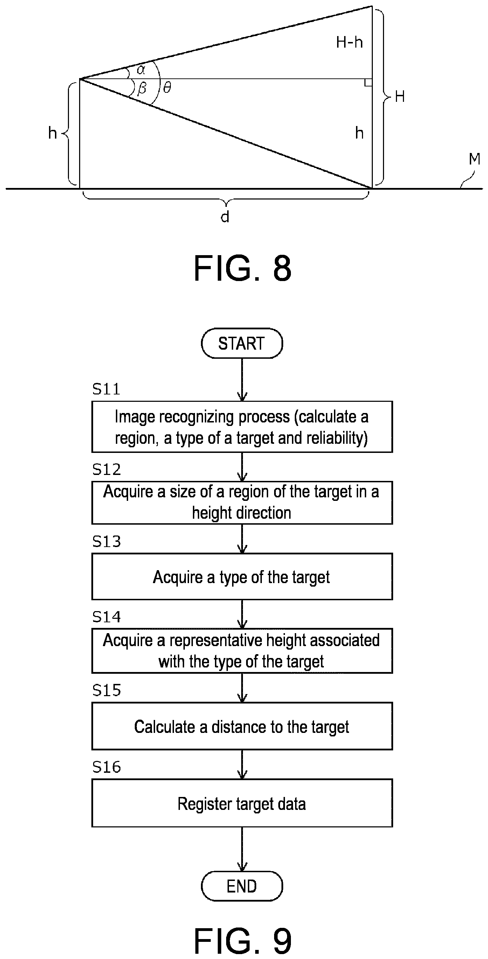

Then, as shown in FIG. 8, the distance estimating unit 34 estimates a distance d from the own ship SP to the target SH, that is, the distance d from the imaging position of the camera 5 to the target SH based on the occupancy angle $\theta$ of the target SH, the representative height, and a height h of the camera 5.

The distance d to the target SH is calculated as below. Although an example assuming that H-h > 0 is described, the same method may be generally applied to derive results in the case where H-h ≤ 0.

The distance d to the target SH is represented by Equation 1 below.

[Equation 1]

$$d = \frac{H + \sqrt{H^2 + 4\tan^2\theta \times h \times (H - h)}}{2\tan\theta}$$

$\alpha$ represents an angle higher than the height h of the camera 5 in the occupancy angle $\theta$ of the target SH, and $\beta$ represents an angle lower than the height h of the camera 5 in the occupancy angle $\theta$ of the target SH.

The tangents of $\alpha$ and $\beta$ are represented in Equation 2 below.

[Equation 2]

$$\tan\alpha = \frac{H - h}{d}, \qquad \tan\beta = \frac{h}{d}$$

When the tangent addition theorem is used, Equation 3 below is obtained.

[Equation 3]

$$\tan\theta = \tan(\alpha+\beta) = \frac{\tan\alpha + \tan\beta}{1 - \tan\alpha\tan\beta}$$

By expanding and re-arranging Equation 3, Equation 4 for d as follows is obtained.

[Equation 4]

$$\tan\theta\, d^2 - Hd - h(H-h)\tan\theta = 0$$

By solving Equation 4 for d using a solution formula, Equation 1 can be obtained.

Since Equation 4 is a quadratic equation, two solutions can be obtained. However, for the solution not appearing in the target equation (the solution with a negative sign of the square root), when H-h>0, d will be negative, and when H-h≦0, d will be an extremely small value, so the solution is not applicable to the case.

The distance estimating unit 34 estimates the distance from the own ship to the target according to the above. The distance from the own ship to the target as estimated by the distance estimating unit 34 is included in the target data together with the position, the orientation, etc., of the target, and registered in the camera management DB 23. In the case where the representative height is defined in a range having an upper limit and a lower limit, the distance estimating unit 34 estimates the distance from the own ship to the target by using the range having an upper limit and a lower limit.

FIG. 9 is a diagram illustrating a procedural example of a target monitoring method realized in the target monitoring system 100. The same figure mainly illustrates a process of estimating the distance to the target. The target monitoring device 1 executes the process shown in the same figure according to the program.

When acquiring the image imaged by the camera 5, the target monitoring device 1 performs an image recognizing process, and calculates the region of the target included in the image, the type of the target, and the reliability that is estimated (S11, the process as the image recognizing unit 31).

Then, the target monitoring device 1 acquires the dimension of the region of the target calculated through the image recognizing process in the height direction (S12). The dimension of the region of the target in the height direction is the dimension of the boundary box BB in the height direction (see FIG. 5).

Then, the target monitoring device 1 acquires the type of the target calculated through the image recognizing process (S 13, the process as the type acquiring unit 32).

Then, the target monitoring device 1 acquires the representative height associated with the type of the target in advance (S14, the process as the height acquiring unit 33). The representative height is acquired by referring to the type-height DB 41 (see FIG. 6).

Then, the target monitoring device 1 estimates the distance from the own ship to the target based on the dimension of the image in the height direction, the dimension of the region of the target in the height direction, and the representative height (S15, the process as the distance estimating unit 34).

Then, the target monitoring device 1 generates the target data including the distance from the own ship to the target and registers the target data in the camera management DB 23. Accordingly, a series of processes on the image have ended.

The target data further include the orientation and the position of the target, etc. The orientation of the target is calculated based on the position of the target in the image and the orientation in which the camera 5 is disposed. The position of the target is calculated based on the distance from the own ship to the target and the orientation of the target.

According to the above embodiment, it is possible to accurately acquire the distance to the target by using an image imaged by the camera 5.

Although the embodiments of the disclosure have been described above, the disclosure is not limited thereto. It goes without saying that various modifications can be made by those skilled in the art.

For example, the distance to the target estimated from the image according to the processes in the embodiment may be averaged with distances to the target estimated from the image by other processes to further increase the accuracy in estimating the distance to the target.

As other processes, there are processes of acquiring a difference between the waterline position of the target and the horizon position from the image, and estimating the distance to the target based on the difference and the distance to the horizon.

[Reference Signs List]

1: Target monitoring device; 2: Display unit; 3: Radar; 4: AIS; 5: Camera; 6: GNSS receiver; 7: Gyro compass; 8: ECDIS; 9: Wireless communicating unit; 10: Ship steering control unit; 20: Control unit; 11, 12: Data acquiring unit; 13: Image acquiring unit; 14: Image processing unit; 15: Data integrating unit; 16: Display control unit; 17: Ship steering determining unit; 21: Radar management DB; 22: AIS management DB; 23: Camera management DB; 24: Integral management DB; 31: Image recognizing unit; 32: Type acquiring unit; 33: Height acquiring unit; 34: Distance estimating unit; 41: Type-height DB; 100: Target monitoring system.

**Claims**

1. A target monitoring device, comprising:

    an image acquiring unit, acquiring an image comprising a target in the sea and imaged by a camera;
    an image recognizing unit, detecting a region of the target comprised in the image;
    a type acquiring unit, acquiring a type of the target;
    a height acquiring unit, acquiring a representative height associated in advance with the type of the target; and
    a distance estimating unit, estimating a distance from an imaging position to the target based on a dimension of the image in a height direction, a dimension of the region of the target in the height direction, and the representative height.

2. The target monitoring device as claimed in claim 1, wherein the distance estimating unit:

    calculates an occupancy angle of the target within a view angle of the camera in the height direction based on the dimension of the image in the height direction, the dimension of the region of the target in the height direction, and the view angle of the camera in the height direction, and
    estimates the distance from the imaging position to the target based on the occupancy angle of the target, the representative height, and a height of the camera.

3. The target monitoring device as claimed in claim 2, wherein the distance estimating unit:
   calculates the occupancy angle of the target in the view angle based on the dimension of the image in the height direction, the dimension of the region of the target in the height direction, the view angle of the camera in the height direction, a focal point distance of the camera, and an optical center of the camera.

4. The target monitoring device as claimed in any one of claims 1 to 3, wherein the image recognizing unit detects a boundary box surrounding the target comprised in the image as the region of the target.

5. The target monitoring device as claimed in any one of claims 1 to 4, wherein the image recognizing unit detects the region and a type of the target comprised in the image, and
   the type acquiring unit acquires the type of the target detected by the image recognizing unit.

6. The target monitoring device as claimed in any one of claims 1 to 5, wherein the type acquiring unit acquires a type of the target detected through an automatic identification system (AIS).

7. The target monitoring device as claimed in any one of claims 1 to 6, wherein the camera is mounted in a ship, and the target in the sea is an other ship.

8. A target monitoring method, comprising:

    acquiring an image comprising a target in the sea and imaged by a camera;
    detecting a region of the target comprised in the image;
    acquiring a type of the target;
    acquiring a representative height associated in advance with the type; and
    estimating a distance from an imaging position to the target based on a dimension of the image in a height direction, a dimension of the region of the target in the height direction, and the representative height.

9. A program, executed by a computer to:

acquire an image comprising a target in the sea and imaged by a camera;
detect a region of the target comprised in the image;
acquire a type of the target;
acquire a representative height associated in advance with the type; and
estimate a distance from an imaging position to the target based on a dimension of the image in a height direction, a dimension of the region of the target in the height direction, and the representative height.

100

1 2 3 4 5

| target monitoring device | display unit | radar | AIS | camera |

N

| GNSS receiver | gyro compass | ECDIS | wireless communication unit | ship steering control unit |

6 7 8 9 10

# FIG. 1

target monitoring device

1

20

control unit

11
radar 3 → data acquiring unit

21
radar management DB

15
data integrating unit

24
integral management DB

16
display control unit → 2
display unit

12
AIS 4 → data acquiring unit

22
AIS management DB

13
camera 5 → image acquiring unit

14
image processing unit

23
camera management DB

17
ship steering determining unit → 10
ship steering control unit

FIG. 2

FIG. 3

FIG. 4

FIG. 5

| type | representative height |
|---|---|
| tanker | Ha |
| vehicle carrier | Hb |
| fishing vessel | Hc |
| pleasure vessel | Hd |
| sailing vessel | He |
| merchant vessel A | Hf |
| passenger vessel A | Hg |
| passenger vessel B | Hi |
| warship | Hj |
| buoy | Hk |
| undetermined | Hl |

# FIG. 6

# FIG. 7

FIG. 8

START

S11
Image recognizing process (calculate a region, a type of a target and reliability)

S12
Acquire a size of a region of the target in a height direction

S13
Acquire a type of the target

S14
Acquire a representative height associated with the type of the target

S15
Calculate a distance to the target

S16
Register target data

END

FIG. 9

## INTERNATIONAL SEARCH REPORT

| International application No. |
|---|
| **PCT/JP2022/013013** |

**A. CLASSIFICATION OF SUBJECT MATTER**

*G01C 3/06*(2006.01)i; *G06T 7/60*(2017.01)i; *H04N 7/18*(2006.01)i
FI: G06T7/60 180B; H04N7/18 D; H04N7/18 C; G01C3/06 120S

According to International Patent Classification (IPC) or to both national classification and IPC

**B. FIELDS SEARCHED**

Minimum documentation searched (classification system followed by classification symbols)
G01C3/06; G06T7/60; H04N7/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2021-111902 A (CANON INC.) 02 August 2021 (2021-08-02) paragraphs [0045]-[0054], fig. 1 | 1, 4-9 |
| A | | 2-3 |
| Y | JP 2021-26683 A (TOYOTA MOTOR CORP.) 22 February 2021 (2021-02-22) paragraphs [0020]-[0044], fig. 3 | 1, 4-9 |
| A | | 2-3 |
| A | JP 2020-201746 A (TOYOTA MOTOR CORP.) 17 December 2020 (2020-12-17) paragraphs [0026]-[0041], fig. 3 | 1-9 |
| A | JP 2020-176892 A (HITACHI AUTOMOTIVE SYSTEMS LTD.) 29 October 2020 (2020-10-29) paragraph [0028] | 1-9 |
| A | JP 2009-59106 A (SEIKO EPSON CORP.) 19 March 2009 (2009-03-19) paragraphs [0029]-[0040], fig. 5 | 1-9 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **07 June 2022** | **14 June 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
**Information on patent family members**

International application No.

**PCT/JP2022/013013**

| Patent document cited in search report | | | Publication date (day/month/year) | Patent family member(s) | Publication date (day/month/year) |
|---|---|---|---|---|---|
| JP | 2021-111902 | A | 02 August 2021 | (Family: none) | |
| JP | 2021-26683 | A | 22 February 2021 | (Family: none) | |
| JP | 2020-201746 | A | 17 December 2020 | US 2020/0394435 A1 paragraphs [0029]-[0044], fig. 3 | |
| JP | 2020-176892 | A | 29 October 2020 | CN 113646607 A paragraph [0028] | |
| JP | 2009-59106 | A | 19 March 2009 | US 2009/0059029 A1 paragraphs [0077]-[0089], fig. 5 | |

Form PCT/ISA/210 (patent family annex) (January 2015)

**EP 4 450 923 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020049634 A